# EUROPÄISCHE PATENTANMELDUNG

(11) **EP 1 184 089 A1**
(43) Veröffentlichungstag der Anmeldung: **06.03.2002**
(21) Anmeldenummer: 00124200.7
(22) Anmeldetag: 08.11.2000
(51) Int. Cl.: B07B 1/28, B07B 1/10, B01D 29/01, B01D 33/04, B07B 1/04

(54) **Vorrichtung und Verfahren zum Sieben, Klassieren, Sichten, Filtern oder Sortieren von Stoffen**

(30) Priorität: 04.09.2000 EP 00810791
(71) Anmelder: TELSONIC AG, CH-9552 Bronschhofen (CH)
(72) Erfinder: Solenthaler, Jürg, 9552 Bronschhofen (CH)
(74) Vertreter: Müller, Christoph Emanuel

(57) **Zusammenfassung**

Zum Sieben von in einer Flüssigkeit enthaltenen Partikeln (P) werden diese auf eine Siebfläche (3) in einem Siebrahmen (2) gegeben. Der Siebvorgang erfolgt durch Beaufschlagung der Flüssigkeit (F) mit Ultraschallschwingungen (U). Die Ultraschallschwingungen (U) werden mit einer Ultraschallanordnung (4) erzeugt, die eine mit der Flüssigkeit (F) in Kontakt bringbare Beschallungsfläche (5) aufweist, auf deren, der Flüssigkeit abgewandten Seite (7) wenigstens ein Ultraschallwandler (6) angeordnet ist. Die Ultraschallanordnung (4) weist eine etwa konische Beschallungsfläche (5) auf.

## Beschreibung

Die Erfindung betrifft eine Vorrichtung und ein Verfahren zum Sieben, Klassieren, Sichten, Filtern oder Sortieren von Stoffen mit den Merkmalen des Oberbegriffs der unabhängigen Patentansprüche.

Es ist bekannt, dass Ultraschallschwingungen Siebgut in einer Siebmaschine positiv beeinflussen. Die schwingenden Bewegungen können Aglomerierungskräfte und Oberflächenspannungen reduzieren und so die Gefahr des Verstopfens von Siebmaschen reduzieren oder verhindern.

Aus der WO 94/27748 ist es beispielsweise bekannt, ein Siebgewebe mit einem Resonator mit fingerartigen Resonatorstäben zu versehen, damit Ultraschallschwingungen möglichst auf das ganze Siebgewebe verteilt werden. Während diese Anordnung im Zusammenhang mit trockenem Siebgut zufriedenstellend arbeitet, haben sich teilweise beim Sieben von in Flüssigkeiten gehaltenen Partikeln Probleme ergeben. Dies rührt insbesondere daher, dass die Flüssigkeit die Ultraschallschwingungen auf dem Gewebe verhältnismässig stark dämpft, so dass trotz den Resonatorstäben Teile des Siebgewebes nicht mit Schwingungen beaufschlagt werden. Hier und im Folgenden werden einheitlich die Bezeichnungen sieben/Sieb verwendet, wobei jede Behandlung des Materials, insbesondere auch Klassieren, Sichten, Filtern oder Sortieren von diesem Begriff umfasst werden soll.

Zum Sieben von in Flüssigkeiten gehaltenen Partikeln mit Ultraschall sind verschiedene Vorrichtungen bekannt.

US 4 693 879 lehrt, benachbart zu der Oberfläche einer Siebtrommel eine Ultraschallsonotrode anzubringen. Ein Nachteil bei dieser Anordnung besteht darin, dass nicht die ganze Siebfläche mit Ultraschall beaufschlagt werden kann. Dadurch ist jeweils nur ein Teil der Siebfläche aktiv brauchbar.

US 4 282 100 schlägt ebenfalls die Verwendung einer Siebtrommel vor. Das zu siebende Material wird durch einen Spalt zwischen einer Sonotrode und der Sieboberfläche hindurchgeführt. Auch hier kann nur ein beschränkter Teil der Siebfläche aktiv genutzt werden.

US 3 490 584 zeigt eine an sich herkömmliche Siebmaschine, bei der die auf dem Siebgewebe gehaltene Flüssigkeit mittels einer Ultraschallsonotrode mit Ultraschallschwingungen beaufschlagt wird. Aufgrund der begrenzten Dimensionen der Sonotrode ist es aber notwendig, die Siebmaschine zu rotieren, um die ganze Siebfläche mit Ultraschallschwingungen zu beaufschlagen. Die Siebmaschine mit einem Rotationsantrieb ist daher in ihrer Konstruktion aufwendig.

Aus US 3 756 400 ist es bekannt, eine Ultrschallsonotrode in einen rohrartigen Behälter einzusetzen, in dem zu siebende Flüssigkeit und Siebgewebe enthalten sind. Ein Nachteil bei dieser Anordnung besteht darin, dass aufgrund des begrenzten Querschnitts der Sonotrode nur verhältnismässig kleine Siebflächen eingesetzt werden können.

Es ist eine Aufgabe der vorliegenden Erfindung, die Nachteile des Bekannten zu vermeiden, insbesondere also eine Vorrichtung und ein Verfahren zum Sieben von in Flüssigkeit enthaltenen Partikeln zu schaffen, mit welchen auf konstruktiv einfache Weise im wesentlichen die gesamte Siebfläche mit Ultraschall beaufschlagt werden kann. Dabei sollen wenn möglich drehbare Siebanordnungen vermieden werden. Die erfindungsgemässe Vorrichtung soll ausserdem einfach auf bestehende Siebmaschinen anwendbar sein. Eine weitere Aufgabe der Erfindung besteht darin, die Effizienz der Ultraschallbeschallung zu erhöhen. Noch eine weitere Aufgabe der Erfindung besteht darin, die in die Flüssigkeit einbringbare Ultraschallenergie zu erhöhen. Die Vorrichtung soll ausserdem einen sicheren Betrieb erlauben; insbesondere soll die Zerstörung der Ultraschallanordnung durch Überlast z.B. bei zu kleiner Menge von Siebgut vermieden werden.

Erfindungsgemäss werden diese Aufgaben mit einer Vorrichtung und einem Verfahren mit den Merkmalen des kennzeichnenden Teils der unabhängigen Patentansprüche gelöst.

Die Vorrichtung zum Sieben von in einer Flüssigkeit enthaltenden Partikeln weist wenigstens einen Siebrahmen mit einer Siebfläche auf. Auf die Siebfläche lässt sich die Flüssigkeit mit den zu siebenden Partikeln auftragen. Die Vorrichtung weist ausserdem wenigstens eine Ultraschallanordnung zum Einleiten von Ultraschallschwingungen in die Flüssigkeit auf. Die Ultraschallanordnung weist eine Beschallungsfläche auf, die mit der Flüssigkeit auf der Siebfläche in Kontakt bringbar ist. Die Beschallungsfläche ist mit wenigstens einem Ultraschallwandler in Schwingung versetzbar. Der Ultraschallwandler ist vorzugsweise auf der der Flüssigkeit abgewandten Seite der Beschallungsfläche angeordnet.

Erfindungsgemäss ist die Ultraschallanordnung also als sogenannter Tauchschwinger ausgebildet. Ein oder mehrere Ultraschallwandler erzeugen Ultraschallschwingungen an einer typischerweise als Blech ausgebildeten Beschallungsfläche. Die insgesamt schwingende Beschallungsfläche ist in Kontakt mit der die Partikel enthaltenden Flüssigkeit bringbar. Damit lässt sich im wesentlichen die gesamte, auf der Siebfläche enthaltene Flüssigkeit beschallen. Dabei wird die Flüssigkeit direkt von oben her, d.h. nicht über die Siebfläche beschallt. Mit solchen Tauchschwingern ist es ausserdem möglich, im Vergleich zu Ultraschallsonotroden bedeutend höhere Ultraschallenergien in die Flüssigkeit einzuleiten, typischerweise bis zu 10 kW.

Weil die Flüssigkeit mit den zu siebenden Partikeln zwischen der Siebfläche und der Beschallungsfläche gewissermassen eingeklemmt wird, ergibt sich zusätzlich ein statischer Druck der sich auf die Siebeigenschaften positiv auswirken kann.

Gemäss einem bevorzugten Ausführungsbeispiel überdeckt deshalb die Beschallungsfläche im wesentlichen die ganze Siebfläche.

Die Siebfläche ist typischerweise etwa rund ausgebildet (wie bei herkömmlichen Siebmaschinen). Die Ultraschallanordnung ist bezogen auf eine Achse senkrecht zur Siebfläche etwa rotationssymmetrisch ausgebildet. Typischerweise kann die Ultraschallanordnung hexagonal ausgebildet sein.

Vorteilhaft weist die Ultraschallanordnung eine Zuführöffnung auf. Die Zuführöffnung ist bevorzugt zentral angeordnet. Dies erlaubt es, die Flüssigkeit durch die oberhalb der Siebfläche angeordnete Ultraschallanordnung hindurch etwa in das Zentrum der Siebfläche aufzugeben.

Gemäss einem besonders bevorzugten Ausführungsbeispiel wird zwischen der Siebfläche und der Beschallungsfläche ein Spalt gebildet, dessen Abstand sich von der Zuführöffnung für die Flüssigkeit mit den Partikeln zu einer Austragöffnung für nicht siebbares Material hin verringert. Im Betrieb der Vorrichtung wird aufgrund von neu zugeführter Flüssigkeit die zu siebende Flüssigkeit von der Zuführöffnung gegen die Austragöffnung hin bewegt. Der Winkel zwischen der Beschallungsfläche und der Siebfläche und/oder die Breite des Spaltes können einstellbar ausgebildet sein.

Durch die schwingende Bewegung der Siebmaschine wird das Siebgut durch Zentrifugalkräfte nach aussen gefördert. Durch den statischen Druck des Siebgutes wird dieses bei einer Verringerung der Spaltbreite leicht komprimiert. So wird gewährleistet, dass die Beschallungsfläche immer in Kontakt mit dem Siebgut bleibt.

Besonders bevorzugt ist eine radialsymmetrische Ultraschall- anordnung, bei der der Spalt zwischen der Siebfläche und der Beschallungsfläche von der Mitte der Ultraschallanordnung aus radial gegen den äusseren Rand hin kontinuierlich abnimmt. Die Beschallungsfläche ist also etwa konisch ausgebildet, wobei aus konstruktiven Gründen ein Aufbau aus flachen Teilstücken denkbar ist.

Vorteilhaft ist der Siebrahmen mit wenigstens einer seitlichen Austragöffnung für nicht siebbares Material versehen. Material, das beim Erreichen des Siebrandes noch nicht gesiebt worden ist, wird durch die Austragöffnung ausgetragen, gewissermassen von der Flüssigkeit ausgeschwemmt. Damit ist ein kontinuierlicher Betrieb der erfindungsgemässen Vorrichtung möglich.

Damit die Ultraschallanordnung auch auf herkömmlichen Siebmaschinen einsetzbar ist, ist sie vorteilhaft zur lösbaren Verbindung mit einer Aussenwand (Oberdeck) einer herkömmlichen Siebmaschine ausgebildet.

Um eine Überlast der Ultraschallanordnung zu vermeiden, kann die Vorrichtung vorzugsweise mit Mitteln zum Messen und/oder Regeln des Niveaus der Flüssigkeit auf der Siebfläche versehen sein. Damit kann vermieden werden, dass die Beschallungsfläche ganz oder teilweise ausser Kontakt mit der Flüssigkeit gerät und dabei ein ungedämpfter Betrieb entsteht. Zum Messen des Niveaus kann ein Messsensor eingesetzt werden. Besonders vorteilhaft wird das Niveau aber indirekt über die Last des Generators für die Ultraschallanordnung ermittelt.

Gemäss einem weiteren Ausführungsbeispiel kann auch eine sogenannte statische Siebmaschine eingesetzt werden. Das Siebgewebe ist dabei unter einem Winkel zur Horizontalen (in Betriebslage des Siebguts) angeordnet, so dass sich das Siebgut aufgrund der Gravitation über die Siebfläche nach unten bewegt.

Die Beschallungsfläche ist unter einem Winkel zur Siebfläche angeordnet. Der Abstand zwischen Beschallungsfläche und Siebfläche verringert sich gegen unten.

In diesem Ausführungsbeispiel können eine oder mehrere Ultraschallanordnungen vorgesehen sein.

Die Beschallungsflächen sind dabei je flach ausgebildet, wobei der Winkel und/oder der Abstand zwischen Beschallungsfläche und Siebfläche auch einstellbar sein kann.

Gemäss einem weiteren alterntiven Ausführungsbeispiel ist die Siebfläche der Vorrichtung vorteilhaft bezogen auf die wenigstens eine Ultraschallanordnung bewegbar angeordnet. Die Beschallungsfläche kann dabei vorteilhaft unter einem Winkel zur Siebfläche angeordnet sein. Dadurch nimmt die Breite die Spaltes zwischen der Siebfläche und der Beschallungsfläche von einer Materialzufuhr zu einer Materialabfuhr ab. Die Siebfläche ist dabei vorteilhaft in der Richtung zwischen der Materialzufuhr und der Materialabfuhr bewegbar. Dadurch lassen sich verschiedene-Vorteile erzeugen. Durch die Bewegung der Siebfläche und dadurch auch des Siebgutes in Richtung des sich verengenden Spaltes wird zusätzlich ein Druck auf das Siebmaterial erzeugt. Dadurch wird die Ultraschallwirkung erhöht. Gleichzeitig werden nicht siebbare grosse Partikel durch die Bewegung des Siebes ausgetragen. Eine Anhäufung von nicht siebbaren Partikeln wird dadurch vermieden.

Vorteilhaft ist es, die Siebfläche als in sich geschlossenes, flexibles Sieb auszubilden, das auf zwei drehbar gelagerten Walzen aufgespannt ist.

Die Erfindung besteht also unter anderem darin, einen (an sich beispielsweise aus der Ultraschallreinigung bekannten) Tauchschwinger zum Beschallen von Siebgut in Flüssigkeiten zu verwenden. Unter Flüssigkeit mit Partikeln werden in diesem Zusammenhang alle fliessfähigen Medien verstanden, die zu siebende Partikel enthalten, also typischerweise Dispersionen, wobei der eigentliche Flüssigkeitsanteil so gering sein kann, dass die zu behandelnde Flüssigkeit eine schlammartige Konsistenz aufweist.

Die Erfindung wird im Folgenden in Ausführungsbeispielen und anhand der Zeichnungen näher erläutert. Es zeigen:
- Figur 1: einen Querschnitt durch eine erfindungsgemässe Vorrichtung,
- Figur 2: eine perspektivische Darstellung auf eine erfindungsgemässe Ultraschallanordnung,
- Figur 3: eine Draufsicht auf die Ultraschallanordnung gemäss Figur 2,
- Figur 4: eine vergrösserte Darstellung eines Ausschnitts aus Figur 1, und
- Figur 5 und 6: schematische Darstellungen von zwei alternativen Ausführungsbeispielen.

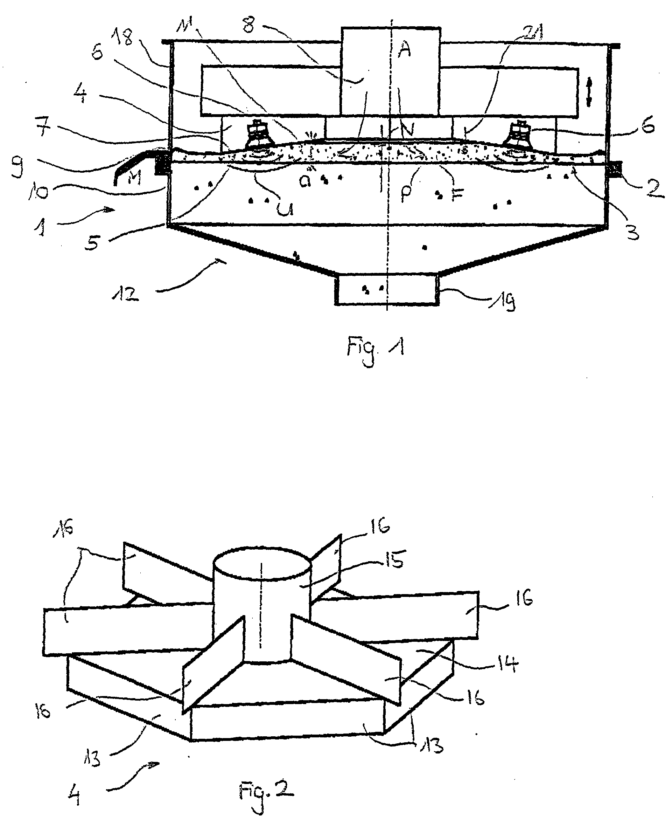

Figur 1 zeigt eine Vorrichtung 1, die zum Sieben von in einer Flüssigkeit F enthaltenen Partikeln P dient. Die Vorrichtung 1 weist einen Siebrahmen 2 auf, welcher eine Siebfläche 3 trägt. Die Siebfläche 3 ist typischerweise ein bekanntes Siebgewebe. Der Siebrahmen 2 und die Siebfläche 3 bilden Teil einer an sich bekannten Siebmaschine 12. Die Siebmaschine 12 ist herkömmlicher Bauart und beispielsweise als Taumel-, Vibrations- oder Rüttelsiebmaschine ausgebildet.

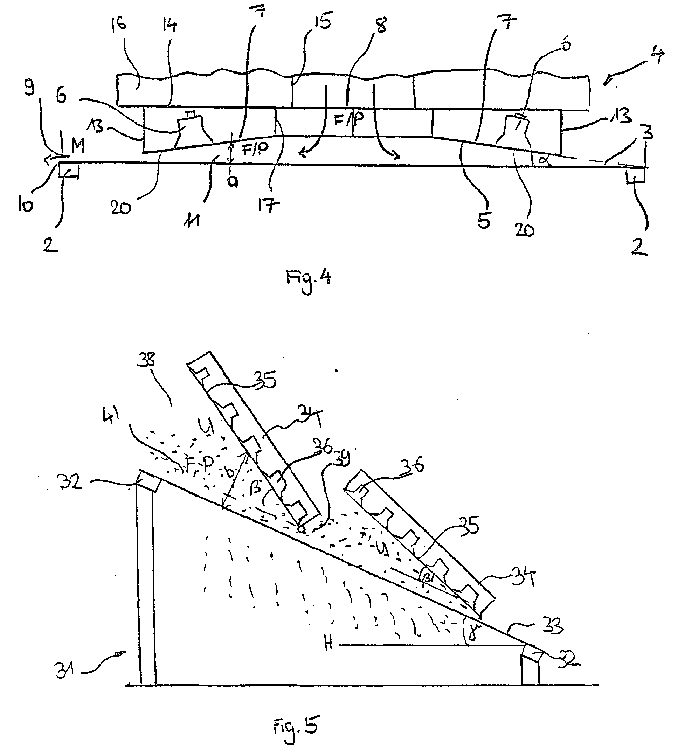

Oberhalb der Siebfläche 3 ist erfindungsgemäss eine Ultraschallanordnung 4 angeordnet. Die Ultraschallanordnung 4 ist wie ein bekannter Tauchschwinger ausgebildet und weist eine Beschallungsfläche 5 auf. An der, der Beschallungsfläche abgewandten Seite 7 sind zwölf Ultraschallwandler 6 angeordnet. Die Ultraschallanordnung 4 ist als in sich geschlossener Kasten ausgebildet, an dessen Innenseite 7 die Ultraschallwandler 6 angeordnet sind (siehe auch Figur 4). Die Beschallungsfläche 5 der Ultraschallanordnung 4 ist mit der die Partikel P enthaltenen Flüssigkeit F in Kontakt bringbar. Über die Beschallungsfläche 5 sind dadurch Ultraschallschwingungen U in die Flüssigkeit F einleitbar.

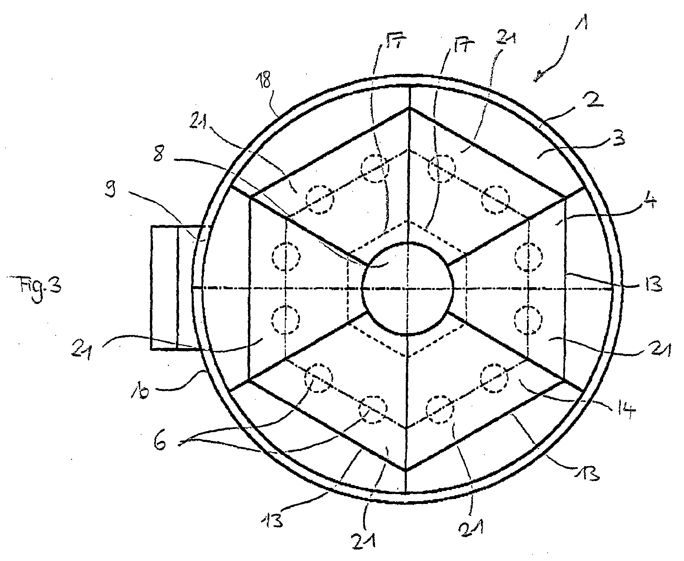

Die Ultraschallanordnung 4 ist bezüglich einer Achse A senkrecht zur Siebfläche 3 rotationssymmetrisch ausgebildet. Die Konstruktion ist typischerweise hexagonal (siehe Figur 2 oder 3). Eine solche hexagonale Konstruktion empfiehlt sich aus konstruktiven Überlegungen. Selbstverständlich wären auch kreisrunde Anordnungen oder mehreckige Anordnungen mit mehr oder weniger als sechs Ecken denkbar. In der Mitte ist die Ultraschallanordnung 4 mit einer Zufuhröffnung 8 versehen, durch welche zu siebendes Material auf die Siebfläche 3 aufgetragen werden kann.

Die Ultraschallanordnung 4 ist in einer kreisrunden Aussenwand 18 gehalten. Die Aussenwand 18 (Oberdeck) ist Teil der Siebmaschine 12. Im Siebrahmen 2 bzw. in der Aussenwand 18 ist eine Öffnung 9 vorgesehen. Durch die Öffnung 9 kann nicht siebbares bzw. nicht gesiebtes Material M ausgetragen werden.

Die Beschallungsfläche 5 der Ultraschallanordnung 4 ist bezogen auf die Siebfläche 3 unter einem Winkel α von ca. 10° geneigt angeordnet (siehe Figur 4), so dass zwischen der Siebfläche 3 und der Beschallungsfläche 5 ein sich verengender Spalt 11 gebildet wird. Der Abstand a zwischen der Siebfläche 3 und der Beschallungsfläche 5 nimmt von der Mitte der Ultraschallanordnung 4 gegen den äusseren Rand 10 hin kontinuierlich ab. Der Abstand a kann auch einstellbar sein, z.B. durch eine verstellbare Befestigung der Ultraschallanordnung 4 an der Siebmaschine 12.

Im Betrieb wird zu siebendes Material (Flüssigkeit F mit Partikeln P) in der Mitte der Ultraschallanordnung 4 auf die Siebfläche 3 gegeben. Siebbares Material tritt durch die Siebfläche 3 hindurch und wird durch einen Abfluss 19 der Siebmaschine 12 entnommen. Nicht gesiebtes oder nicht siebbares Material bewegt sich aufgrund von neu zugeführtem Siebgut und Siebmaschinenschwingungen radial nach aussen. Material, dass bei Erreichen des äusseren Randes 10 noch nicht gesiebt worden ist, wird durch die Austragöffnung 9 ausgetragen.

Die auf der Siebfläche 3 enthaltene Flüssigkeit F weist ein bestimmtes Niveau N auf. Um zu vermeiden, dass die Ultraschallanordnung 4 ohne Last betrieben und dadurch zerstört wird, muss sichergestellt werden, dass das Niveau N der Flüssigkeit F nicht unterhalb einen vorbestimmten Wert absinkt. Dazu ist ein schematisch dargestellter Messsensor 21 vorgesehen, der das Niveau N misst. Sobald das Niveau N unter einen Sollwert sinkt wird der Ultraschallgenerator gestoppt und/oder zusätzliches Siebgut hinzugefügt. Es ist aber auch denkbar, das Niveau N über die Last des Generators für die Ultraschallwandler 6 zu bestimmen.

In Figur 2 ist die konstruktive Ausbildung einer Ultraschallanordnung 4 gezeigt. Die Ultraschallanordnung 4 ist als Kasten ausgebildet.

Die Rückwand 14 der kastenförmigen Ultraschallanordnung 4 ist ausserdem mit Verstärkungs- bzw. Halteblechen 16 versehen, die sternförmig um ein Zufuhrrohr 15 für das Siebgut angeordnet sind (Figuren 2 und 3). Die Ultraschallanordnung wird über die Haltebleche 16 vorzugsweise lösbar mit der Aussenwand 18 verbunden. Die Haltebleche 16 können verstellbar mit der Aussenwand 18 verbunden werden, sodass der Abstand a eingestellt werden kann. Durch Wahl der Grösse der Haltebleche 16 kann die Ultraschallanordnung an die Dimension des Siebrahmens 2 angepasst werden. Die kastenförmige Ultraschallanordnung 4 ist gegen aussen hin dicht verschweisst. Auf der der Flüssigkeit F abgewandten Seite 7 der Beschallungsfläche 5 sind die Ultraschallwandler 6 (siehe Figur 1) angeordnet. Eine Stromzufuhr (nicht gezeigt) für die Ultraschallwandler wird durch die Oberfläche des Kastens (beispielsweise durch die Rückseite) hinausgeführt.

Die kastenartige Ultraschallanordnung 4 ist auf der Aussenseite durch sechs Seitenwände 13 und auf der Innenseite durch sechs Innenwände 17 (siehe Figuren 3 und 4) begrenzt. Als Fortsetzung einer runden Zuführöffnung 8 an der Rückwand ist das Zufuhrrohr 15 an der Rückwand 14 vorgesehen, durch welches zu siebendes Material eingeführt werden kann.

Der Kasten enthält sechs Teilflächen 20, die zusammen die Beschallungsfläche 5 bilden (siehe Figuren 3 und 4). Die Teilflächen 20 sind je trapezförmig ausgebildet. Je zwei nebeneinander liegende Teilflächen 20 sind entlang einer ihrer Seiten miteinander verschweisst, wobei die Teilflächen 20 nicht in der gleichen Ebene liegen, so dass die Beschallungsfläche 5 eine insgesamt etwa konische Form hat (siehe Figur 4).

Figur 3 zeigt die sechseckige Ausbildung der Ultraschallanordnung 4. Die Haltebleche 16 verbinden die Anordnung 4 mit der Aussenwand 18. Die Aussenwand 18 ist rund ausgebildet und bildet einen Teil der Siebmaschine. Die Ultraschallanordnung 4 weist etwas geringere Dimensionen auf als der Siebrahmen 2 und ist aussen durch die Seitenwände 13 begrenzt und sechseckig ausgebildet. Die runde Zufuhröffnung 8 in der Rückwand 14 der Ultraschallanordnung 4 ist bezogen auf die Innenwände 17 kleiner ausgebildet. Die Innenwände 17 bilden zusammen ebenfalls ein Sechseck.

Figur 4 zeigt einen vergrösserten Ausschnitt aus Figur 1, wobei aus Gründen der Übersichtlichkeit die Flüssigkeit F mit den zu siebenden Partikeln P nicht dargestellt ist.

In Figur 4 ist die Anordnung der einzelnen Teilflächen 20 in verschiedenen Ebenen gezeigt, die zu einer etwa konischen Form der Beschallungsfläche 5 führt.

Als Ultraschallwandler 6 werden typischerweise zwölf piezoelektrische Wandler eingesetzt. Die piezoelektrischen Wandler 6 sind an der der Flüssigkeit abgewandten Seite 7 der Ultraschallanordnung 4 festgeklebt. Die Ultraschallwandler 6 werden parallel zueinander mit einem herkömmlichen Ultraschallgenerator auf einer Frequenz von etwa 30 kHz betrieben. Mit den hier dargestellten zwölf Wandlern 6 lässt sich eine Leistung von bis zu 0,6 kW in die Flüssigkeit F eintragen.

Die kastenförmige Ultraschallanordnung 4 besteht aus miteinander verschweissten Teilen aus nichtrostenden Chrom-Stahl (1.4301) mit einer Dicke von typischerweise 2 mm.

Figur 5 zeigt schematisch ein alternatives Ausführungsbeispiel. Die Vorrichtung ist als statische Siebmaschine 31 ausgebildet. Auf einem Siebrahmen 32 ist eine Siebfläche 33 unter einem Winkel γ zur Horizontalen H augespannt. Oberhalb der Siebfläche 33 sind zwei Ultraschallanordnungen 34 angeordnet. Zu siebende Flüssigkeit F mit Partikeln P wird zwischen einer Beschallungsfläche 35 der Ultraschallanordnung 34 und die Siebfläche 33 durchgeführt. Die Ultraschallanordnungen 34 sind verstellbar angeordnet, sodass der Winkel β, β' zwischen der Beschallungsfläche 35 und der Siebfläche 33, z.B. in Abhängigkeit vom Siebgut, eingestellt werden kann. In Figur 5 sind zwei Ultraschallanordnungen 34 gezeigt. Das zu siebende Material bewegt sich aufgrund der Gravitation über die Siebfläche 33 von einer Zufuhröffnung 38 nach unten zu einer Abfuhröffnung 39 und wird dabei mit Ultraschallschwingungen U beaufschlagt. Die Breite b des Spaltes 41 zwischen der Siebfläche 33 und der Beschallungsfläche 35 nimmt nach unten hin ab. Die in Figur 5 obere Ultraschallanordnung 34 ist im Abstand zur Siebfläche 33 angeordnet, sodass sich nicht gesiebtes Material weiter entlang der Siebfläche 33 bewegen kann, wo es von der in Figur 5 unteren Ultraschallanordnung 34 mit Schwingungen beaufschlagt wird.

Der Winkel β, β' kann individuell eingestellt werden und kann typischerweise 5 - 15° betragen.

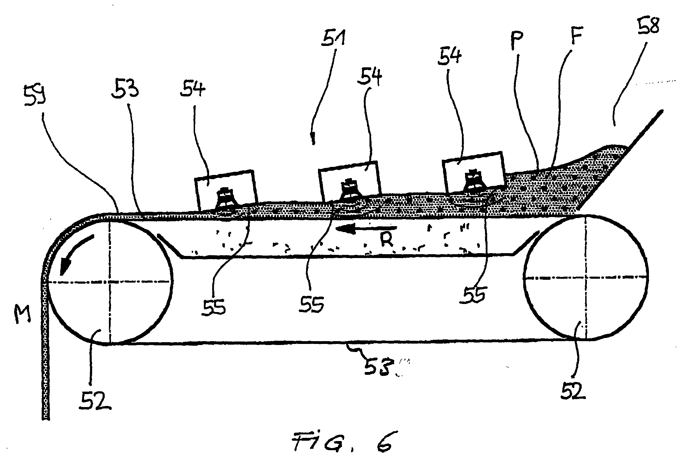

Figur 6 zeigt ein weiteres alternatives Ausführungsbeispiel der erfindungsgemässen Vorrichtung. Die Vorrichtung 51 weist zwei drehbar gelagerte Walzen 52 auf. Ein in sich geschlossenes flexibles Sieb 53 ist auf den Walzen 52 aufgespannt. Durch Drehung der Walzen kann das Sieb 53 in Richtung R mit einer Geschwindigkeit von etwa 0,5 - 3 m/min bewegt werden. Zu siebende Partikel P in einer Flüssigkeit F werden an einer Materialzufuhr 58 auf das Sieb 53 gegeben. Aufgrund der Bewegung des Siebes 53 wird die Flüssigkeit F mit den Partikeln P in Richtung von Ultraschallanordnungen 54 gefördert, welche mit Beschallungsflächen 55 versehen sind. Zwischen den Beschallungsflächen 55 und der Siebfläche 53 wird ein Spalt gebildet, dessen Breite in Richtung R von der Materialzurfuhr 58 zu einer Materialabfuhr 59 abnimmt. Nicht siebbares Material M wird aufgrund der Bewegung der Siebfläche 53 bei der Materialabfuhr 59 von der Siebfläche 53 entfernt. Zusätzlich können Abstreifmechanismen wie Rakel vorgesehen werden, die die nicht siebbaren Partikel M von der Siebfläche 53 entfernen.

Das gesiebte Material wird unterhalb des Siebes in einer Wanne aufgefangen. Die Wanne kann beispielsweise geneigt sein, sodass das gesiebte Material wegfliesst.

## Patentansprüche

1. Vorrichtung (1) zum Sieben, Klassieren, Sichten, Filtern oder Sortieren von in einer Flüssigkeit (F) enthaltenen Partikeln (P),
mit wenigstens einem Siebrahmen (2; 32; 52) mit einer Siebfläche (3; 33; 53), auf welche die Flüssigkeit (F) mit den Partikeln (P) auftragbar ist,
und mit wenigstens einer Ultraschallanordnung (4; 34; 54) zum Einleiten von Ultraschallschwingungen (U) in die Flüssigkeit (F),
**dadurch gekennzeichnet, dass** die Ultraschallanordnung (4; 34; 54) eine mit der Flüssigkeit (F) auf der Siebfläche (3; 33; 53) in Kontakt bringbare Beschallungsfläche (5; 35; 55) aufweist, die mittels wenigstens einem Ultraschallwandler (6; 36) in Schwingung versetzbar ist, wobei insbesondere auf der, der Flüssigkeit (F) abgewandten Seite (7) wenigstens ein Ultraschallwandler (6; 36) angeordnet ist.

2. Vorrichtung nach Anspruch 1, **dadurch gekennzeichnet, dass** im wesentlichen die ganze Siebfläche (3; 33) von der Beschallungsfläche (5; 35) bedeckt ist.

3. Vorrichtung nach einem der Ansprüche 1 oder 2, **dadurch gekennzeichnet, dass** die Siebfläche (3) etwa rund ausgebildet ist und/oder dass die Ultraschallanordnung (4) bezogen auf eine Achse (A) senkrecht zur Siebfläche (3) etwa rotationssymmetrisch ausgebildet ist.

4. Vorrichtung nach einem der Ansprüche 1 bis 3, **dadurch gekennzeichnet, dass** die Ultraschallanordnung (4) eine Zuführöffnung (8), vorzugsweise eine zentrale Zuführöffnung für die Flüssigkeit (F) aufweist.

5. Vorrichtung nach Anspruch 4, **dadurch gekennzeichnet, dass** zwischen der Siebfläche (3; 33) und der Beschallungsfläche (5; 35) ein Spalt (11; 41) gebildet wird, dessen Breite (a) sich von der Zufuhröffnung (8; 38) für die Flüssigkeit (F) weg, insbesondere zu wenigstens einer Austragöffnung (9; 39) für nicht siebbares Material (M) hin verringert.

6. Vorrichtung nach Anspruch 3 und 5, **dadurch gekennzeichnet, dass** die Breite (a) des Spaltes (11) zwischen der Siebfläche (3) und der Beschallungsfläche (5) von der Mitte der Ultraschallanordnung (4) radial gegen den äusseren Rand (10) zu abnimmt.

7. Vorrichtung nach Anspruch 5, **dadurch gekennzeichnet, dass** die Austragöffnung (9) als Öffnung und/oder in einer umlaufenden Aussenwand (18) der Ultraschallanordnung (4) ausgebildet ist.

8. Vorrichtung nach einem der Ansprüche 1 bis 7, **dadurch gekennzeichnet, dass** die Ultraschallanordnung (4) lösbar mit einer Siebmaschine (12) verbunden oder verbindbar ist.

9. Vorrichtung nach einem der Ansprüche 1 bis 8, **gekennzeichnet durch** Mittel (21) zum Messen und/oder Regeln des Niveaus N der Flüssigkeit (F) auf der Siebfläche (3).

10. Vorrichtung nach einem der Ansprüche 1, 2 oder 5, **dadurch gekennzeichnet, dass** die Siebfläche (33) gegenüber der Horizontalen (H) geneigt ist und dass die Beschallungsfläche (35) flach ist und vorzugsweise unter einem Winkel (β, β') zur Siebfläche (33) verläuft.

11. Vorrichtung nach einem der Ansprüche 1 bis 10, **dadurch gekennzeichnet, dass** der Abstand (a; b) und/oder der Winkel (α; β) zwischen der Beschallungsfläche (5; 35) und der Siebfläche (3; 33) einstellbar ist.

12. Vorrichtung nach Anspruch 1, **dadurch gekennzeichnet, dass** die Siebfläche (53) bezogen auf die wenigstens eine Ultraschallanordnung (54) bewegbar angeordnet ist.

13. Vorrichtung nach Anspruch 12, **dadurch gekennzeichnet, dass** die Beschallungsfläche unter einem Winkel zur Siebfläche angeordnet ist, sodass die Breite des Spaltes zwischen der Siebfläche (53) und der Beschallungsfläche (55) von einer Materialzufuhr (58) zu einer Materialabfuhr (59) abnimmt, wobei die Siebfläche (53) in Richtung (R) zwischen der Materialzufuhr (58) und der Materialabfuhr (59) bewegbar ist.

14. Vorrichtung nach einem der Ansprüche 12 oder 13, **dadurch gekennzeichnet, dass** die Siebfläche als in sich geschlossenes, flexibles Sieb ausgebilet ist, das auf zwei drehbar gelagerten Walzen (52) aufgespannt ist.

15. Ultraschallanordnung für eine Vorrichtung nach einem der Ansprüche 1 bis 14, **dadurch gekennzeichnet, dass** die Ultraschallanordnung (4; 34) eine Beschallungsfläche (5; 35) aufweist, die mit einer Flüssigkeit (F) in Kontakt bringbar ist, wobei insbesondere auf der der Flüssigkeit abgewandten Seite (7) wenigstens ein Ultraschallwandler (6; 36) angeordnet ist.

16. Ultraschallanordnung nach Anspruch 15, **dadurch gekennzeichnet, dass** die Ultraschallanordnung (4) auf den Siebrahmen (2) einer bekannten Siebmaschine (12) aufsetzbar ist.

17. Ultraschallanordnung nach einem der Ansprüche 14 oder 15, **dadurch gekennzeichnet, dass** die Beschallungsfläche (5) etwa konisch verläuft, vorzugsweise aus im Winkel zueinander stehenden Teilflächen (20) ausgebildet ist.

18. Verfahren zum Sieben, Klassieren, Sichten, Filtern oder Sortieren von in einer Flüssigkeit (F) enthaltenen Partikeln (P) auf einer Siebfläche (3; 33; 53),
bei welchem mittels einer Ultraschallanordnung (4; 34; 54) Ultraschallschwingungen (U) in die Flüssigkeit eingeleitet werden,
**dadurch gekennzeichnet, dass** die Ultraschallschwingungen (U) über eine mit der Flüssigkeit (F) in Kontakt bringbare Beschallungsfläche (5; 35; 55) in die Flüssigkeit (F) eingeleitet werden, wobei die Beschallungsfläche (5; 35; 55), insbesondere mit wenigstens einem auf der der Flüssigkeit (F) abgewandten Seite (7) der Beschallungsfläche (5; 35; 55) angeordneten Ultraschallwandler (6) in Schwingungen versetzt wird.

19. Verfahren nach Anspruch 18, **dadurch gekennzeichnet, dass** die Flüssigkeit mit den Partikeln (P) durch einen Spalt (11) zwischen der Beschallungsfläche (5) und der Siebfläche (3) durchgeführt wird.

20. Verfahren nach einem der Ansprüche 18 oder 19, **dadurch gekennzeichnet, dass** das Niveau (N) die Flüssigkeit auf der Siebfläche (3) gemessen und/oder geregelt wird.

21. Verfahren nach einem der Ansprüche 18 bis 20, **dadurch gekennzeichnet, dass** die Siebfläche (53) während dem Siebvorgang bewegt wird.

22. Verfahren nach Anspruch 21, **dadurch gekennzeichnet, dass** die Siebfläche (53) von einer Materialzufuhr (58) in Richtung (R) zu einer Materialabfuhr (59) bewegt wird.
